(19) Europäisches Patentamt

European Patent Office

Office européen des brevets

(11) **EP 3 147 856 A1**

(12) **EUROPEAN PATENT APPLICATION**

(43) Date of publication:
**29.03.2017 Bulletin 2017/13**

(51) Int Cl.:
***G06Q 40/04*** *(2012.01)* ***G06Q 40/06*** *(2012.01)*

(21) Application number: **16002009.5**

(22) Date of filing: **15.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.09.2015 TW 104131882**

(71) Applicants:
• **Cho, Tseng-Sheng**
  **20647 Keelung City (TW)**

• **Cho, Yu-Hsin**
  **20647 Keelung City (TW)**

(72) Inventor: **CHO, Tseng-Sheng**
  **20647 Keelung City (TW)**

(74) Representative: **Zeitler Volpert Kandlbinder**
  **Patent- und Rechtsanwälte Partnerschaft mbB**
  **Herrnstrasse 44**
  **80539 München (DE)**

(54) **CHANGES-IN-EQUITY TRADING ANALYSIS SYSTEM**

(57)    A changes-in-equity trading analysis system (1) analyzes and determines a bull/bear direction and a buying/selling price of a stock by a computer device directly and quickly without requiring any adjustment of weight value reduction or comparing and correcting parameters, so as to calculate a T2 strategy indicator (25) intraday or after closing. The system issues a bull/bear trading signal when a change of value of the T2 strategy indicator (25) reaches a system set value and provides a bull/bear direction signal and a buying/selling price decision signal to investors according to actual needs to help investors to grasp the best bull/bear direction and buying/selling price of a stock on the day of changes in equity accurately and quickly.

FIG. 1

**Description**

**FIELD OF THE INVENTION**

The present invention relates to a system applied for changes-in-equity trading analysis and capable of calculating and predicting a turning point of the bull/bear direction and the buying/selling price signal of a stock on the date of changes in equity.

**BACKGROUND OF THE INVENTION**

**1. Description of the Related Art**

The investment of stocks has always been the most favorable financial management to the general public. It is definitely what investors want most to obtain the information with regard to the rise and drop of the price of a certain stock among a variety of stocks in advance to make a decision on buying or selling the stock timely and correctly. However, investors still use the conventional weight reduction algorithm and KD index comparison to invest on stocks on the date of changes in equity (such as ex-rights date, ex-dividend date, capital increase date, capital decrease date, or split date, etc) and fail to make definite judgments or create a reliable basis on the bull/bear direction and the buying/selling price of the stock on the date of changes in equity. A vague trading decision will lead to an improper operation result, thus not just causing psychological pressure to investors only, but also resulting in low investment performance.
To meet the aforementioned requirements, the conventional weight reduction algorithm developed by the industry also has specific reference and determination values. However, the investors have to understand the relation between the principle of weight reduction computation and the variation of the weight value. If the investors have insufficient information or understanding and select wrong bull/bear direction, buying/selling prices and buying/selling points, the investment performance will be low.
Therefore, it is an important subject for the industry to develop a system capable of automatically providing correct determination information as well as displaying the information in a simplified display method to adapt different types of changes in equity.

**2. Summary of the Invention**

Therefore, it is a primary objective of the present invention to provide a changes-in-equity trading analysis system that computes a plurality of trading data of a stock market database, wherein the trading data include the data of a stock name, a stock code, a date, a price, etc, and the system comprises a data capture device, and a data computing device coupled to the external stock market database and the data capture device, and the data computing device comprises a trading data set, a control instruction, an input device, a T index calculator, a T1 strategy indicator, a T index adjuster, and a T2 strategy indicator;
The trading data set of the data computing device is coupled to the data capture device, and the data capture device captures a plurality of trading data from the stock market database and stores the plurality of trading data into the trading data set.
The control instruction is coupled to the trading data set, the input device, the T index calculator, and the T index adjuster.
The control instruction makes decisions and carries out the following procedure for a company represented by a stock code:
(1) If the trading date is not the date of changes in equity of a company represented by the stock code, the plurality of trading data will be calculated by the T index calculator.
(2) If the trading date is the date of changes in equity of a company represented by the stock code, the plurality of trading data will be calculated by the T index adjuster.
Wherein, the T index calculator generates a T1 strategy indicator by a T1 index formula given below:

$$\text{T1 strategy indicator} = (I \times W_1 + J \times W_2 + K \times W_3) \div C_4 + (1 - \theta \times W_4) \times C_5;$$

Wherein, $W_1$, $W_2$, $W_3$, $W_4$, $C_4$, and $C_5$ are optimal weight values determined by the T1 index formula; $\theta$ is the relative volume trend obtained by comparing today's stock market estimated volume divided by yesterday's stock market volume with the today's estimated volume of a stock divided by the yesterday's volume of the stock to obtain the real time value $\theta$; the opening strength I of the current day is obtained by comparing the difference between today's opening price and yesterday's closing price of a stock with the yesterday's closing price, and then selectively allocating a weight value $C_1$ according to the T1 index formula to obtain the value I; the intraday real-time strength J is obtained by comparing the intraday trading price and the today's opening price of a stock with the today's opening price, and then selectively allocating a weight value $C_2$ according to the T1 index formula to obtain the value J; and the intraday price amplitude K is obtained by comparing the difference between today's intraday highest price and lowest price of a stock with the yesterday's closing price of the stock and then selectively allocating a weight value $C_3$ according to the T1 index formula to obtain the value K;

The control instruction provides a risk control interval $(\gamma_2, \gamma_1)$, and if the T1 strategy indicator $\geqq \gamma_1 > 0$, then the bull/buy signal will be determined; and if the T1 index $\geqq \gamma_2 < 0$, then the bear/sell signal will be determined.

Wherein, the T index adjuster generates a T2 strategy indicator by a T2 index formula given below:

$$\text{T2 strategy indicator} = (I' \times W_1' + J' \times W_2' + K' \times W_3') \div C_4' + (1 - \theta' \times W_4') \times C_5';$$

Wherein, $W_1'$, $W_2'$, $W_3'$, $W_4'$, $C_4'$, and $C_5'$ are optimal weight values determined by the T2 index formula; $\theta'$ is the relative volume trend obtained by comparing today's stock market estimated volume by yesterday's stock market volume with the today's estimated volume of a stock divided by the yesterday's volume of the stock to obtain the real time value $\theta'$; the opening strength I' of the current day is obtained by comparing the difference between the opening price of a stock on the date of changes in equity and the reference price of the stock on the date of changes in equity with the reference price on the date of changes in equity and then selectively allocating a weight value $C_1'$ according to the T2 index formula to obtain the value I'; the intraday real-time strength J' is obtained by comparing the difference between the intraday trading price of a stock and the opening price of the stock on the date of changes in equity opening price with the opening price of the stock on the date of changes in equity and then selectively allocating a weight value $C_2'$ according to the T2 index formula to obtain the value J'; and the intraday price amplitude K' is obtained by comparing the difference between the intraday highest price and lowest price on the date of changes in equity with the reference price on the date of changes in equity and then selectively allocating a weight value $C_3'$ according to the T2 index formula to obtain the value K'.

The control instruction provides a risk control interval $(\gamma_2, \gamma_1)$, and if the T2 strategy indicator $\geqq \gamma_1 > 0$, then the bull/buy signal will be determined; and if the T2 strategy indicator $\leqq \gamma_2 < 0$, then the bear/sell signal will be determined.

Wherein, the risk control interval $(\gamma_2, \gamma_1)$ includes a positive value $\gamma_1$ set by the control instruction to compute the statistics of a stock's best buying price in a trading period according to the stock of a company represented by the stock code, and the value $\gamma_1$ is a trigger point of the bull/buy signal, and the risk control interval $(\gamma_2, \gamma_1)$ also includes a negative value $\gamma_2$ set by the control instruction to compute the statistics of the stock's best selling price, and the value $\gamma_2$ is a trigger point of the bear/sell signal, and the values $\gamma_2$ and $\gamma_1$ constitute a long and short trading boarder interval, which is the risk control interval $(\gamma_2, \gamma_1)$.

Wherein, when the T1 strategy indicator or the T2 strategy indicator reaches the value $\gamma_1$, the price corresponsive to the value $\gamma_1$ is the determined buying price provided by the system, and when the T1 strategy indicator or the T2 strategy indicator reaches the value $\gamma_2$, the price corresponsive to the value $\gamma_2$ is the determined selling price provided by the system.

In summation, the analysis system of the present invention generates the T index calculator, the T index adjuster, the T1 strategy indicator, the T2 strategy indicator, the performance evaluator, and the performance index database by the algorithm developed by the inventor of the present invention and analyzes the plurality of trading data on a normal trading day or on the date of changes in equity of a stock, so as to determine the bull/bear direction and the buying/selling price.

Therefore, the present invention can overcome the drawback of the conventional KD index comparison that fails to determine the bull/bear prices and directions definitely due to the large change of equity, and provide clearer and more stable performance measurement results and price differences than those provided by the weight reduction method. Compared with the conventional trading strategy, the present invention gives a strict and regular trading rule and a more objective trading signal to overcome the uncertainty of the conventional systems that substantially rely on the experience of the investors or the shortcoming of the conventional KD index comparison that causes distortions easily. The present invention also uses the weight reduction method to obtain definite and stable information to improve the opportunity for making profits, and the invention can measure the gain/loss and the estimated rate of return during the investment period accurately.

BRIEF DESCRIPTION OF THE DRAWINGS

FIG. 1 shows a functional block diagram of an embodiment of the present invention;

FIG. 2 shows the determined results of a bull/bear direction and a buying/selling price of a stock of Company A in the day of changes in equity without using the present invention;

FIG. 3 shows the results of a bull/bear direction and a buying/selling price of a stock of Company A in the day of changes in equity determined by using the present invention; and

FIG. 4 shows the procedure of a "Performance stage settlement method" of the present invention.

## DESCRIPTION OF THE PREFERRED EMBODIMENTS

The above and other objects, features and advantages of this disclosure will become apparent from the following detailed description taken with the accompanying drawings.

The present invention is illustrated by the description of one of the embodiments only, but any similar or equivalent methods and means of the present invention may be used in actual use, and the stock described in this specification refers to rights circulated and traded in the market, or its derivative financial products such as options or warrants, etc, and the stock market refers to places or means for trading the aforementioned stocks.

The present invention discloses a changes-in-equity trading analysis system with the purpose of using a trading analysis program to evaluate a trading strategy or decision method properly and eliminate the influencing factors on the day of changes in equity to establish an appropriate trading strategy to obtain the best performance.

In the principle of the present invention, the trend of a stock price on the day of changes in equity is predicted by the "performance stage settlement" and the "reference price adjustment". Specifically, the present invention uses the technical aspect of the stock market together with the T index calculator and the T index adjuster for the analysis, and derives the correlated factors from the substantially discontinuous information of the stock price, so that the price is smoothed and continuous to reduce the distortion of judgment significantly, so as to achieve the effect of predicting the stock bull/bear direction and the buying/selling price accurately.

The changes-in-equity trading analysis system of the present invention is elaborated as follows. The present invention discloses an analysis system for computing a plurality of trading data of a stock market database, and the trading data include the data of time.

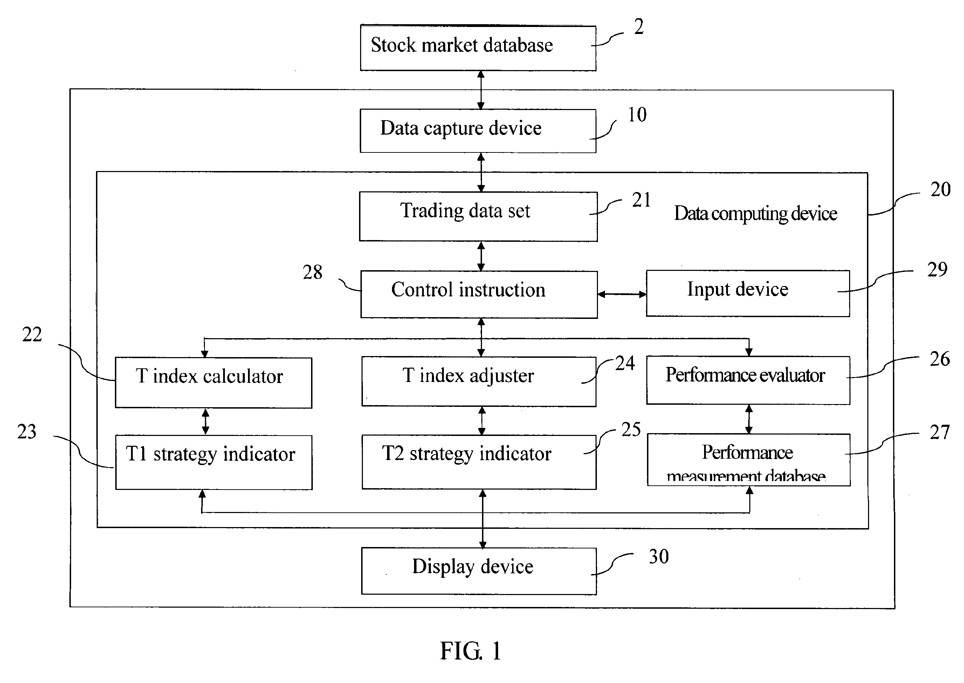

With reference to FIGS. 1 to 4 for a functional block diagram of an embodiment of the present invention, a diagram showing the determined results of a bull/bear direction and a buying/selling price of a stock of Company A in the day of changes in equity without using the present invention, a diagram showing the determined results of a bull/bear direction and a buying/selling price of a stock of Company A in the day of changes in equity by the present invention, and a diagram showing a performance stage settlement method of the present invention respectively, the present invention provides a changes-in-equity trading analysis system for computing a plurality of trading data of a stock market database 2, wherein the trading data include the data of a stock name, a stock code, a date, and a price;

In FIG. 1, the changes-in-equity trading analysis system 1 of the present invention comprises a data capture device 10, and a data computing device 20, and the changes-in-equity trading analysis system 1 may be installed in any electronic device including but not limited to a mobile phone, a stock machine, a flat PC, a notebook computer, a desktop computer, an internet of things device, etc.

The data capture device 10 is coupled to the external stock market database 2 and the data computing device 20. The data computing device 20 comprises a trading data set 21, a control instruction 28, an input device 29, a T index calculator 22, a T1 strategy indicator 23, a T index adjuster 24, a T2 strategy indicator 25, a performance evaluator 26, and a performance measurement database 27.

The trading data set 21 of the data computing device 20 is coupled to the data capture device 10, and the data capture device 10 automatically captures a plurality of trading data from the stock market database 2 by a frequency or a cycle or a condition inputted by investors and stores the plurality of trading data into the trading data set 21. Specifically, the data capture device 10 captures a plurality of corresponsive trading data from an online or offline database containing stock related data according to a preset condition or a condition inputted by the investors, and the trading data include a code, a name, a buying/selling price, a trading time, a trading quantity of a stock or any other data such as a delivery deadline or a type of a stock.

After the data capture device 10 obtains the trading data, the trading data are stored and recorded in the trading data set 21 of the data computing device 20 for future data analysis or data processing.

The control instruction 28 is coupled to the trading data set 21, the input device 29, the T index calculator 22, and the T index adjuster 24.

The control instruction 28 determines and carries out the following procedure of a company represented by a stock code:

(1) If the trading date is not the date of changes in equity of a company represented by the stock code, then the plurality of trading data will be calculated by the T index calculator 22.

(2) If the trading date is the date of changes in equity of a company represented by the stock code, then the plurality of trading data will be calculated by the T index adjuster 24.

Wherein, the T index calculator 22 generates a T1 strategy indicator 23 by a T1 index formula given below:

$$\text{T1 strategy indicator} = (I \times W_1 + J \times W_2 + K \times W_3) \div C_4 + (1 - \theta \times W_4) \times C_5.$$

Wherein, $W_1$, $W_2$, $W_3$, $W_4$, $C_4$, and $C_5$ are optimal weight values determined by the T1 index formula; $\theta$ is the relative volume trend obtained by comparing today's stock market estimated volume divided by yesterday's stock market volume with today's estimated volume of a stock divided by yesterday's volume of the stock to obtain the real time value $\theta$, and the positive value shows that the volume of the stock is stronger than the market and other stocks, and the degree of fund aggregation of the stock is higher, and thus the stock is a intraday strong indicator stock.

The opening strength I of the current day is obtained by comparing the difference between the today's opening price and the yesterday's closing price of the stock with the yesterday's closing price, and selectively allocating a weight value $C_1$ according to the T1 index formula to obtain the value I.

The intraday real-time strength J is obtained by comparing the intraday trading price and the today's opening price of the stock with the today's opening price and selectively allocating a weight value $C_2$ to obtain the value J.

The intraday price amplitude K is obtained by comparing the difference between today's intraday highest price and lowest price of the stock with the yesterday's closing price, and then selectively allocating a weight value $C_3$ according to the T1 index formula to obtain the value K.

The control instruction 28 provides a risk control interval ($\gamma_2$, $\gamma_1$), and if the T1 strategy indicator 23 $\geqq \gamma_1 > 0$ (greater than or equal to $\gamma_1 = +2.5$), then the bull/buy signal will be determined; and if the T1 strategy indicator 23 $\geqq \gamma_2 < 0$ (smaller than or equal to $\gamma_2 = -2.5$), then the bear/sell signal will be determined.

Such simple and definite variation value of the T1 strategy indicator 23 is used to determine and obtain a definite bull buying/bear selling decision signal and provide the information for investors to select a stock, wherein the larger the T1 strategy indicator 23, the stronger the bull trend, and a smaller negative value indicates a stronger bear trend.

Wherein, the T index adjuster 24 generates a T2 strategy indicator 25 by a T2 index formula given below:

$$\text{T2 strategy indicator } 25 = (I' \times W_1' + J' \times W_2' + K' \times W_3') \div C_4' + (1 - \theta' \times W_4') \times C_5';$$

Wherein, $W_1'$, $W_2'$, $W_3'$, $W_4'$, $C_4'$, and $C_5'$ are optimal weight value determined by the T2 index formula, $\theta'$ is the relative volume trend calculated by dividing today's stock market estimated volume by yesterday's stock market volume, and compared with the today's estimated volume of the stock divided by the yesterday's volume of the stock to obtain the real time $\theta'$ value, and a positive value stands for a stronger status of the volume of a stock with respect to the stock market and other stocks and shows that the degree of fund aggregation of the stock is high, and indicates a strong intraday fund and volume indication stock.

The value of the opening strength I' of the current day is calculated by comparing the difference between the opening price of a stock on the date of changes in equity and the reference price of the stock on the date of changes in equity with the reference price of the stock on the date of changes in equity, and then selectively allocating a weight value $C_1'$ according to the T2 index formula to obtain the value I'.

The intraday real-time strength J' is obtained by comparing the difference between the intraday trading price of a stock and the price of the stock on the date of changes in equity with the opening price on the date of changes in equity, and then selectively allocating a weight value $C_2'$ according to the T2 index formula to obtain the value J'.

The intraday price amplitude K' is obtained by comparing the difference of the intraday highest price and lowest price of a stock on the date of changes in equity with the reference price on the date of changes in equity according to the T2 index formula, and then selectively allocating a weight value $C_3'$ to obtain the value K'.

The control instruction 28 provides a risk control interval ($\gamma_2$, $\gamma_1$), and if the T2 strategy indicator 25 $\leqq \gamma_1 > 0$ (such as greater than or equal to $\gamma_1 = +2.5$), a bull/buy signal will be determined; and if the T2 strategy indicator 25 $\leqq \gamma_2 < 0$ (such as smaller than or equal to $\gamma_2 = -2.5$), a bear/sell signal will be determined.

The simple and definite variation value of the T2 strategy indicator 25 is provided for determining and obtaining a definite bull buying//bear selling decision signal for investors to select a stock, wherein the lager the value of the T2 strategy indicator 25, the stronger the bull trend, and a smaller negative value shows a stronger bear trend.

The risk control interval ($\gamma_2$, $\gamma_1$) includes a positive value $\gamma_1$ set by the control instruction to compute the statistics of a stock's best buying price in a trading period according to the stock of a company represented by the stock code, and the value $\gamma_1$ is a trigger point of the bull/buy signal, and the risk control interval ($\gamma_2$, $\gamma_1$) also includes a negative value

$\gamma_2$ set by the control instruction to compute the statistics of the stock's best selling price, and the value $\gamma_2$ is a trigger point of the bear/sell signal, and the values $\gamma_2$ and $\gamma_1$ constitute a long and short trading boarder interval, which is the risk control interval $(\gamma_2, \gamma_1)$, and such risk control interval $(\gamma_2, \gamma_1)$ may also be called the optimal bull and bear indication interval $(\gamma_2, \gamma_1)$.

For example, the largest interval of the risk control interval $(\gamma_2, \gamma_1)$ may be set to be (-10, 10), so that $\gamma_1$ falls in the range of $0<\gamma_1\leqq10$, and $\gamma_2$ falls in the range of $-10\leqq\gamma_2<0$ to facilitate matching the settings of the variation value of the T1 strategy indicator 23 and the variation value of the T2 strategy indicator 25.

Wherein, when the T1 strategy indicator 23 or the T2 strategy indicator 25 rises to the value $\gamma_1$ for the first time in the trading day, the price corresponsive to the value $\gamma_1$ is the determined buying price provided by the system; and when the T1 strategy indicator 23 or the T2 strategy indicator 25 drops to the value $\gamma_2$ for the first time in the trading day, the price corresponsive to the value $\gamma_2$ is the determined selling price provided by the system.

In addition, investors may input a self-set risk control interval $(\alpha_2, \alpha_1)$ through the input device 29 according to a personal risk tolerance, wherein the broader the risk control interval $(\alpha_2, \alpha_1)$, the larger the opportunity of holding the original stocks, and the investors will be more conservative on trading. If the T1 strategy indicator 23 $\geqq\alpha_1>0$ or the T2 strategy indicator 25 $\geqq\alpha_1>0$, the bull/buy signal will be determined; and if the T1 strategy indicator 23 $\geqq\alpha_2<0$ or the T2 strategy indicator 25 $\leqq\alpha_2<0$, the bear/sell signal will be determined.

In addition, the changes-in-equity trading analysis system of the present invention comprises a display device 30 coupled to the T index calculator 22, and the T index adjuster 24 and provided for displaying the T1 strategy indicator 23, the T2 strategy indicator 25, the risk control interval $(\gamma_2, \gamma_1)$ provided by the control instruction 28, the risk control interval $(\alpha_2, \alpha_1)$ set by the investors, and the determined buying price and selling price provided by the system.

Wherein, the display device 30 further displays the plurality of trading data.

Wherein, the display device 30 may also be a touch display device. If the display device 30 is a touch display device, the display device 30 may be used as an input device 29 as well.

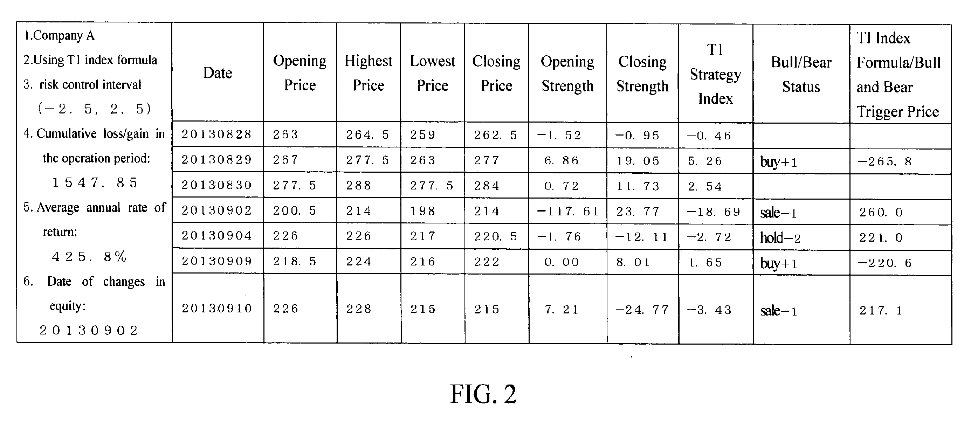

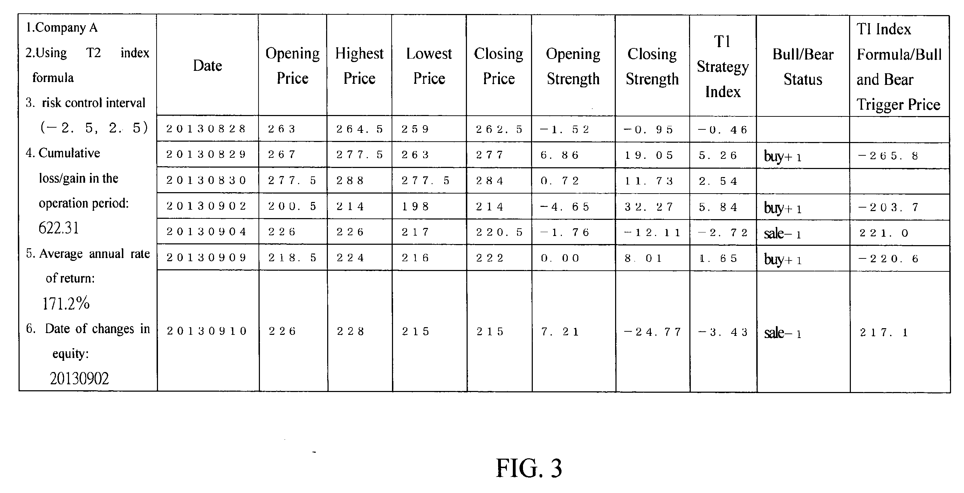

With reference to FIG. 2 for the determination result of bull/bear direction and buying/selling price of a stock on the date of changes in equity without using the system of the present invention, Company A is used for example, and its date of changes in equity is 20130902, and the embodiment of the T1 index formula is still used, and the T index calculator 22 is used to obtain the T1 strategy indicator 23 = $-18.69\leqq\gamma_2$= -2.5 directly (wherein the value $\gamma_2$ is the optimal bear signal trigger value set by this system), which is a short sell signal T1 with the strategy indicator 23= -18.69 (wherein the opening strength =-117.61, and the closing strength =23.77, and a sell signal: T1 strategy indicator 23= -18.69 may be obtained by the T1 index formula). On the date of changes of equity (20130902) as shown in FIG. 3, the free allotment rate = 40%, the cash dividend = 3.4, the right/dividend value = 84.5, the opening price of the day on the current day = 200.5, the highest price =214, the lowest price = 198, and the closing price = 214. However, the corresponsive selling price = 260 which dies not fall within the actual price interval (198, 214) of the stock of that day. Obviously, the conventional method still using the T1 index formula on the date of changes in equity has significant errors which affect the investors' investment significantly.

With reference to FIG. 3 for the determination results of the bull/bear direction and the buying/selling price of a stock on the day of changes in equity by using the present invention, Company A is used for illustration, and its date of changes in equity is 20130902, and the embodiment of the T2 index formula is used, and the stock name and the operation period are the same as those of the embodiment as shown in FIG. 2. The T index adjuster 24 directly obtains the T2 strategy indicator 25 =+5.84, and the embodiment as shown in FIG. 3 has a T2 strategy indicator 25 =+5.84$\geqq\gamma_1$=+2.5, which is a long buying signal, wherein the buying price =203.7 (In column of the bull/bear trigger price of the T2 index formula as shown in FIG. 3, the buying price is represented by a negative number (which stands for debit). On the other hand, the selling price is represented by a positive number (which stands for receivable), wherein the opening strength = -4.65, the closing strength = 32.27; and a buying signal is obtained from the T2 index formula: T2 strategy indicator 25 = +5.84). On the date of changes of equity (20130902) of the embodiment as shown in FIG. 3, the free allotment rate = 40%, the cash dividend = 3.4, the right/dividend value = 84.5, the opening price of the stock on the current day = 200.5, the highest price = 214, the lowest price = 198, and the closing price = 214; and the bull/bear direction determined by this system is a long buying with a buying price = 203.7 which complies with the actual price interval (198, 214) of the stock on the day of changes in equity. Obviously, the T2 index formula of the present invention gives a more accurate determination on the day of changes in equity than the conventional method, so that the investors can grasp the best bull/bear direction and buying/selling price of a stock on the day of changes in equity accurately and quickly.

In summation of the description of the two embodiments of Company A as shown in FIGS. 2 and 3, the following conclusions are drawn: (1). The bull/bear direction determination: The embodiment as shown in FIG. 2 is a short sell (T1 strategy indicator 23= $-18.69\leqq\gamma_2$= -2.5), the embodiment as shown in FIG 3 is corrected to a long buying (T2 strategy indicator 25=+5.84$\geqq\gamma_1$=+2.5). (2). The buying/selling price determination: In the first embodiment, the price is determined to be a selling price =260, which does not comply with the actual price interval (198, 214) of the stock in the day of changes in equity, and the second embodiment corrects the price to a buying price =203.7 which complies with the actual price interval (198, 214) of the stock in the day of changes in equity. Obviously, the conventional method has significant errors which affect the investment of the investors significantly.

In addition, the present invention further uses a "performance stage settlement method" to overcome the problems of the conventional system that fails to evaluate the investment operation and performance measurement. The data computing device 20 of the present invention further comprises a performance evaluator 26, and a performance measurement database 27 coupled to the performance evaluator 26, and the performance evaluator 26 is coupled to a control instruction 28, an input device 29, a T index calculator 22, a T index adjuster 24, a trading data set 21 and a data capture device 10. The performance evaluator 26 calculates and measures the remuneration performance of different stocks according to the T1 index formula, the T2 index formula and the plurality of trading data and stores the remuneration performances into the performance measurement database 27, and displays the remuneration performances on a display device 30 coupled to the performance evaluator 26.

If one or more dates of changes in equity occur within a time period while using the "performance stage settlement method" of the present invention, the closing price of the previous trading day of each date of changes in equity is referenced to settle the original holding portion (bull portion or bear portion) of previous trading day for each date of changes in equity by stages, the price differences accumulated sequentially for each period of changes in equity are settled and the related fees and taxes are deducted, and then the cumulative loss/gain of the operation period and the average annual rate of return are calculated, so as to obtain the effective quarter rate of return or the effective annual rate of return, and these rates of return are stored in the performance measurement database 27 and displayed on the display device 30.

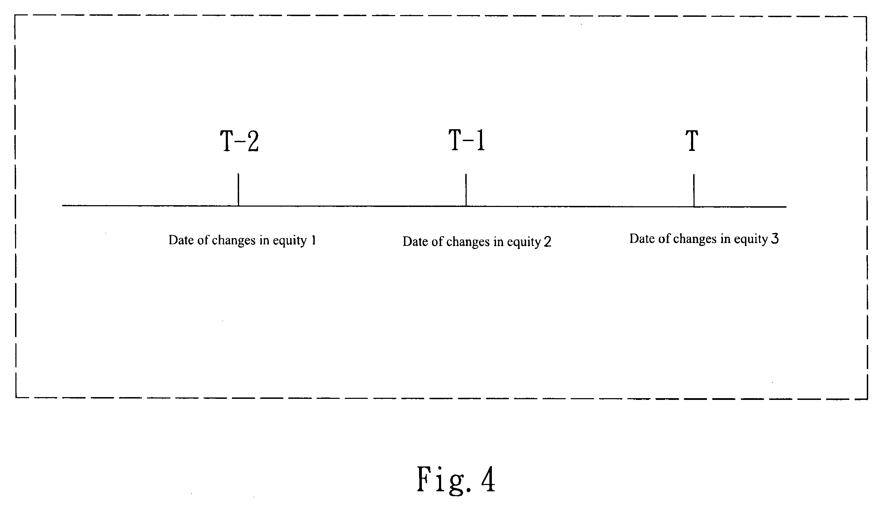

With reference to FIG. 4 for the "performance stage settlement method" of the present invention, the stock has three dates of changes in equity T, T-1 and T-2, the original holding bull/bear portions of the previous trading day of the dates of changes in equity are settled by stages according to the closing price of the previous trading day of each date of changes in equity (For example, the date of changes in equity is 20130902 as shown in the embodiment as shown in FIG. 3, and the closing price = 284 of the previous trading day 20130830 is used to offset and settle the original holding bull portion with a price =268.8, and a price difference with a loss/gain =284-268.8=15.2), and the price differences accumulated sequentially in each period of changes in equity are settled by stages, and the related fees and taxes are deducted to obtain the accurate cumulative loss/gain and average annual rate of return in within the operation period (In the embodiment as shown in FIG. 3: The cumulative loss/gain within the operation period = 622.31, and the average annual rate of return = 171.2%).

In the present invention, investors may input the conditions for data and stock code through an input device, so that the system can calculate the cumulative loss/gain of the operation period and the average annual rate of return of any time period according to the trading data and display the information on the display device 30 for the investors' reference. The investors may input different conditions repeatedly for trials. Even if there are more than one dates of changes in equity within a time condition, the system can still provide an accurate calculation based on the "performance stage settlement method", so that the investors can obtain an accurate cumulative loss/gain of an operation period and an accurate average annual rate of return.

From the foregoing, the present invention provides a rigorous and regular trading rule and played a more objective trading signals, T1 strategy indicator and T2 strategy indicators of the present invention are the results by the interaction between the components produced, in which the change factors: (a)the relative volume trend $\theta$, (b)the opening strength of the current day I, (c)the intraday real-time strength J, (d)the intraday price amplitude K, are combined with historical data, real-time stock market data , and real-time calculate T1 strategy indicator and T2 strategy indicators are for each stock property. The present invention real-time determine the bull and bear price and display the bull and bear status and strength. The present invention is a procedure and a result of an information processing, non-original method of operation will use a simple computer implementation.

The case T1 strategy indicator, T2 strategy indicator, risk control interval ($\gamma_2$, $\gamma_1$), (a).the relative volume trend $\theta$, (b)the opening strength of the current day I, (c)the intraday real-time strength J, (d)the intraday price amplitude K K, as well as the index formula T1, T2 index formula and interval, $\gamma_1$) of the comparison, as a part of the problem-solving integral, innovative solutions when the conventional technology the stock on the date of change in ownership stake, and the bull and bear price and direction failed to provide reliable evidence of the problem.

The invention overcomes the drawbacks of the conventional KD index comparison method that fails to determine the bull/bear price and direction during a significant change of equity, and the performance measurement results and profits resulted from a price difference are more definite and stable than the weight value reduction method. Compared with the conventional trading strategy, the present invention provides a strict and regular trading rule and a more objective trading signal to overcome the uncertainty of the conventional systems that substantially rely on the experience of the investors or the shortcoming of the conventional KD index comparison that causes distortions easily. The present invention also uses the weight reduction method to obtain definite and stable information to improve the opportunity for making profits, and the invention can measure the gain/loss and the estimated rate of return during the investment period accurately.

**Claims**

1. A changes-in-equity trading analysis system (1), for computing a plurality of trading data (2) of a stock market database, and the plurality of trading data including the data of a stock name, a stock code, a date, and a price; and the system comprising a data capture device (10), and a data computing device (20) coupled to the external stock market database (2) and the data capture device (20); and the data computing device (20) comprising a trading data set (21), a control instruction (28), an input device (29), a T index calculator (22), a T1 strategy indicator (23), a T index adjuster (24), and a T2 strategy indicator (25); **characterized in that** the trading data set (21) of the data computing device (20) is coupled to the data capture device (10), and the data capture device (10) captures the plurality of trading data from the stock market database (2) and stores the plurality of trading data into the trading data set (21);

the control instruction (28) is coupled to the trading data set (21), the input device (29), the T index calculator (22), and the T index adjuster (24;

the control instruction (28) determines and carries out the following procedure for a company represented by a stock code:

(1) if the trading date is not the date of changes in equity of a company represented by the stock code, then the plurality of trading data will be calculated by the T index calculator (22);
(2) if the trading date is the date of changes in equity of a company represented by the stock code, then the plurality of trading data will be calculated by the T index adjuster (24);

wherein, the T index calculator (22) generates a T1 strategy indicator (23) by a T1 index formula given below:

$$\text{T1 strategy indicator (23)} = (I{\times}W_1+J{\times}W_2+K{\times}W_3){\div}C_4+(1{-}\theta{\times}W_4){\times}C_5;$$

wherein, $W_1$, $W_2$, $W_3$, $W_4$, $C_4$, and $C_5$ are optimal weight values determined by the T1 index formula; $\theta$ is the relative volume trend obtained by comparing today's stock market estimated volume divided by yesterday's stock market volume with today's estimated volume of a stock divided by yesterday's volume of the stock to obtain the real time value $\theta$; the opening strength I of the current day is obtained by comparing the difference between the today's opening price and the yesterday's closing price of the stock with the yesterday's closing price, and selectively allocating a weight value $C_1$ according to the T1 index formula to obtain the value I; the intraday real-time strength J is obtained by comparing the intraday trading price and the today's opening price of the stock with the today's opening price and selectively allocating a weight value $C_2$ to obtain the value J; and the intraday price amplitude K is obtained by comparing the difference between today's intraday highest price and lowest price of the stock with the yesterday's closing price, and then selectively allocating a weight value $C_3$ according to the T1 index formula to obtain the value K;

the control instruction (28) provides a risk control interval ($\gamma_2$, $\gamma_1$), and if the T1 strategy indicator (23) $\geqq\gamma_1{>}0$, then the bull/buy signal will be determined; and if the T1 strategy indicator (23) $\leqq\gamma_2{<}0$, then the bear/sell signal will be determined,

wherein, the T index adjuster (24) generates a T2 strategy indicator (25) by a T2 index formula given below:

$$\text{T2 strategy indicator (25)} =(I'{\times}W_1'+J'{\times}W_2'+K'{\times}W_3'){\div}C_4'+(1{-}\theta'{\times}W_4'){\times}C_5';$$

wherein, $W_1'$, $W_2'$, $W_3'$, $W_4'$, $C_4'$, and $C_5'$ are optimal weight values determined by the T2 index formula; $\theta'$ is a relative volume trend obtained by comparing today's stock market estimated volume divided by yesterday's stock market volume with today's estimated volume of a stock divided by yesterday's volume of the stock to obtain the value of a real time $\theta'$; and the opening strength I' is obtained by comparing the difference of the opening price of a stock on the date of changes in equity and the reference price of the stock on the date of changes in equity with the reference price of the stock on the date of changes in equity, and then selectively allocating a weight value $C_1'$ according to the T2 index formula to obtain the value I'; and the intraday real-time strength J' is obtained by comparing the difference between the intraday trading price of a stock and the opening price of the stock on the date of changes in equity with the opening price on the date of changes in equity, and then selectively allocating a weight value $C_2$ according to the T2 index formula to obtain the value J'; and the intraday price amplitude K' is obtained by comparing the difference between the intraday highest price and lowest price of a stock on the date of changes in equity with the reference price of the stock on the date of changes in equity, and selectively allocating a weight value $C_3'$

according to the T2 index formula to obtain the value K';
the control instruction (28) provides a risk control interval ($\gamma_2$, $\gamma_1$), and if the T2 strategy indicator (25) $\geqq\gamma_1>0$, a bull/buy signal will be determined; and if the T2 strategy indicator (25) $\leqq\gamma_2<0$, then a bear/sell signal will be determined.

2. The changes-in-equity trading analysis system (1) according to claim 1, wherein the risk control interval ($\gamma_2$, $\gamma_1$) includes a positive value $\gamma_1$ set by the control instruction (28) to compute the statistics of a stock's best buying price of a company represented by the stock code in a trading period, and the value $\gamma_1$ is a trigger point of the bull/buy signal, and the risk control interval ($\gamma_2$, $\gamma_1$) further includes a negative value $\gamma_2$ set by the control instruction (28) to compute the statistics of the stock's best selling price, and the value $\gamma_2$ is a trigger point of the bear/sell signal, and the values of $\gamma_2$ and $\gamma_1$ constitute a long and short trading boarder interval which is the risk control interval ($\gamma_2$, $\gamma_1$).

3. The changes-in-equity trading analysis system (1) according to claim 2, wherein the $\gamma_1$ risk control interval ($\gamma_2$, $\gamma_1$) has the largest interval of (-10, 10), and the $\gamma_1$ falls within a range of $0<\gamma_1\leqq10$, and the $\gamma_2$ falls within a range of -$10\leqq\gamma_2<0$.

4. The changes-in-equity trading analysis system (1) according to claim 3, wherein when the T1 strategy indicator (23) or the T2 strategy indicator (25) rises to $\gamma_1$ for the first time in the trading day, the price corresponsive to $\gamma_1$ is the determined buying price provided by the system, and when the T1 strategy indicator (23) or the T2 strategy indicator (25) drops to $\gamma_2$ for the first time in the trading day, the price corresponsive to $\gamma_2$ is the determined selling price provided by the system.

5. The changes-in-equity trading analysis system (1) according to claim 3, wherein an investor may input a self-set risk control interval ($\alpha_2$, $\alpha_1$) through the input device, and the broader the risk control interval ($\alpha_2$, $\alpha_1$), the larger the opportunity of keeping the original holding stock, and if the T1 strategy indicator (23) $\geqq\alpha_1>0$ or T2 strategy indicator (25) $\geqq\alpha_1>0$, the a bull/buy signal will be determined; and if the T1 strategy indicator (23) $\leqq\alpha_2<0$ or the T2 strategy indicator (25) $\leqq\alpha_2<0$, then a bear/sell signal will be determined.

6. The changes-in-equity trading analysis system (1) according to claim 5, further comprising a display device (30) coupled to the T index calculator (22) and the T index adjuster (24) and provided for displaying the T1 strategy indicator (23), the T2 strategy indicator (25), and the risk control interval ($\gamma_2$, $\gamma_1$) provided by the control instruction (28), and investors setting the risk control interval ($\alpha_2$, $\alpha_1$), and the system providing the determined buying price and selling price.

7. The changes-in-equity trading analysis system (1) according to claim 6, wherein the display device (30) further displays the plurality of trading data.

8. The changes-in-equity trading analysis system (1) according to claim 6, wherein the data computing device (20) further comprises a performance evaluator (26), a performance measurement database (27) coupled to the performance evaluator (26), and the performance evaluator (26) being coupled to the control instruction (28), the input device (29), the T index calculator (22), the T index adjuster (24), the trading data set (21), and the data capture device (10); the performance evaluator (26) calculating and measuring the remuneration performance of each stock according to the T1 index formula, the T2 index formula and the plurality of trading data, and storing the remuneration performances into the performance measurement database (27), and displaying the remuneration performances on the display device (30) coupled to the performance evaluator (26).

9. The changes-in-equity trading analysis system (1) according to claim 8, wherein if the performance evaluator (26) encounters one or more dates of changes in equity in an operation period, then the closing price of the previous trading day of each date of changes in equity is used to settle the original holding portion of the previous trading day of each date of changes in equity one at a time by stages, and the settled price difference of each changes in equity is accumulated and related fees and taxes are deducted to calculate a cumulative loss/gain and an average annual rate of return of the operation period, and the cumulative loss/gain and the average annual rate are displayed on the display device. (30)

10. The changes-in-equity trading analysis system (1) according to claim 1, installed in a mobile phone, a stock machine, a flat PC, a notebook computer, a desktop computer or an internet of things device.

```
                    ┌─────────────────────────┐
                    │  Stock market database  │──── 2
                    └─────────────────────────┘
                                ↕
  ┌─────────────────────────────────────────────────────────────────┐
  │                    ┌─────────────────────────┐                    │
  │                    │   Data capture device   │──── 10             │
  │                    └─────────────────────────┘                    │
  │                                ↕                                   │
  │  ┌──────────────────────────────────────────────────────────┐    │──── 20
  │  │          ┌───────────────────────┐   Data computing device│    │
  │  │          │    Trading data set   │── 21                   │    │
  │  │          └───────────────────────┘                        │    │
  │  │                      ↕                                     │    │
  │  │ 28   ┌───────────────────────┐    ┌──────────────────┐    │    │──── 29
  │  │      │  Control instruction  │◄──►│   Input device   │    │    │
  │  │      └───────────────────────┘    └──────────────────┘    │    │
  │  │ 22 ┌──────────────┐ ┌──────────────┐ ┌──────────────────┐ │    │──── 26
  │  │    │ T index      │ │ T index      │ │  Performance     │ │    │
  │  │    │ calculator   │ │ adjuster  │24│ │  evaluator       │ │    │
  │  │    └──────────────┘ └──────────────┘ └──────────────────┘ │    │
  │  │ 23 ┌──────────────┐ ┌──────────────┐ ┌──────────────────┐ │    │──── 27
  │  │    │ T1 strategy  │ │ T2 strategy  │ │  Performance     │ │    │
  │  │    │ indicator    │ │ indicator │25│ │ measurement database│ │  │
  │  │    └──────────────┘ └──────────────┘ └──────────────────┘ │    │
  │  └──────────────────────────────────────────────────────────┘    │
  │                    ┌─────────────────────────┐                    │
  │                    │      Display device     │──── 30             │
  │                    └─────────────────────────┘                    │
  └─────────────────────────────────────────────────────────────────┘
```

FIG. 1

| 1.Company A<br>2.Using T1 index formula<br>3. risk control interval<br>（－2. 5, 2. 5） | Date | Opening Price | Highest Price | Lowest Price | Closing Price | Opening Strength | Closing Strength | T1 Strategy Index | Bull/Bear Status | T1 Index Formula/Bull and Bear Trigger Price |
|---|---|---|---|---|---|---|---|---|---|---|
| 4. Cumulative loss/gain in | 20130828 | 263 | 264. 5 | 259 | 262. 5 | －1. 52 | －0. 95 | －0. 46 | | |
| the operation period: | 20130829 | 267 | 277. 5 | 263 | 277 | 6. 86 | 19. 05 | 5. 26 | buy+1 | －265. 8 |
| 1547. 85 | 20130830 | 277. 5 | 288 | 277. 5 | 284 | 0. 72 | 11. 73 | 2. 54 | | |
| 5. Average annual rate of | 20130902 | 200. 5 | 214 | 198 | 214 | －117. 61 | 23. 77 | －18. 69 | sale－1 | 260. 0 |
| return: | 20130904 | 226 | 226 | 217 | 220. 5 | －1. 76 | －12. 11 | －2. 72 | hold－2 | 221. 0 |
| 425. 8% | 20130909 | 218. 5 | 224 | 216 | 222 | 0. 00 | 8. 01 | 1. 65 | buy+1 | －220. 6 |
| 6. Date of changes in<br>equity:<br>20130902 | 20130910 | 226 | 228 | 215 | 215 | 7. 21 | －24. 77 | －3. 43 | sale－1 | 217. 1 |

## FIG. 2

EP 3 147 856 A1

| 1.Company A  2.Using T2 index formula  3. risk control interval (−2. 5, 2. 5)  4. Cumulative loss/gain in the operation period: 622.31  5. Average annual rate of return: 171.2%  6. Date of changes in equity: 20130902 | Date | Opening Price | Highest Price | Lowest Price | Closing Price | Opening Strength | Closing Strength | T1 Strategy Index | Bull/Bear Status | T1 Index Formula/Bull and Bear Trigger Price |
|---|---|---|---|---|---|---|---|---|---|
| | 2 0 1 3 0 8 2 8 | 2 6 3 | 2 6 4. 5 | 2 5 9 | 2 6 2. 5 | −1. 5 2 | −0. 9 5 | −0. 4 6 | | |
| | 2 0 1 3 0 8 2 9 | 2 6 7 | 2 7 7. 5 | 2 6 3 | 2 7 7 | 6. 8 6 | 1 9. 0 5 | 5. 2 6 | buy+1 | −2 6 5. 8 |
| | 2 0 1 3 0 8 3 0 | 2 7 7. 5 | 2 8 8 | 2 7 7. 5 | 2 8 4 | 0. 7 2 | 1 1. 7 3 | 2. 5 4 | | |
| | 2 0 1 3 0 9 0 2 | 2 0 0. 5 | 2 1 4 | 1 9 8 | 2 1 4 | −4. 6 5 | 3 2. 2 7 | 5. 8 4 | buy+1 | −2 0 3. 7 |
| | 2 0 1 3 0 9 0 4 | 2 2 6 | 2 2 6 | 2 1 7 | 2 2 0. 5 | −1. 7 6 | −1 2. 1 1 | −2. 7 2 | sale−1 | 2 2 1. 0 |
| | 2 0 1 3 0 9 0 9 | 2 1 8. 5 | 2 2 4 | 2 1 6 | 2 2 2 | 0. 0 0 | 8. 0 1 | 1. 6 5 | buy+1 | −2 2 0. 6 |
| | 2 0 1 3 0 9 1 0 | 2 2 6 | 2 2 8 | 2 1 5 | 2 1 5 | 7. 2 1 | −2 4. 7 7 | −3. 4 3 | sale−1 | 2 1 7. 1 |

<div align="center">

## FIG. 3

</div>

EP 3 147 856 A1

T-2                    T-1                    T

Date of changes in equity 1    Date of changes in equity 2    Date of changes in equity 3

Fig. 4

**EP 3 147 856 A1**

Europäisches
Patentamt
European
Patent Office
Office européen
des brevets

# EUROPEAN SEARCH REPORT

Application Number

EP 16 00 2009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/024349 A1 (VENKATESAN MAGESHKUMAR [US] ET AL) 24 January 2013 (2013-01-24) * claims 1-20 * | 1-10 | INV. G06Q40/04 G06Q40/06 |
| X | US 2015/066725 A1 (CAI HUIQING [US]) 5 March 2015 (2015-03-05) * claims 1-30 * | 1-10 | |
| X | KR 2003 0080612 A (CHO DAL HYUN [KR]) 17 October 2003 (2003-10-17) * abstract * | 1-10 | |
| X | US 7 599 868 B1 (TANPOCO ALVIN F [US]) 6 October 2009 (2009-10-06) * claims 1-15 * | 1-10 | |

TECHNICAL FIELDS
SEARCHED       (IPC)

G06Q

The present search report has been drawn up for all claims

| Place of search | Date of completion of the search | Examiner |
|---|---|---|
| Munich | 18 November 2016 | Haitof, Houssam |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

14

**EP 3 147 856 A1**

## ANNEX TO THE EUROPEAN SEARCH REPORT
## ON EUROPEAN PATENT APPLICATION NO.

EP 16 00 2009

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2016

| Patent document cited in search report | | Publication date | Patent family member(s) | | Publication date |
|---|---|---|---|---|---|
| US 2013024349 | A1 | 24-01-2013 | NONE | | |
| US 2015066725 | A1 | 05-03-2015 | NONE | | |
| KR 20030080612 | A | 17-10-2003 | NONE | | |
| US 7599868 | B1 | 06-10-2009 | US | 7599868 B1 | 06-10-2009 |
| | | | US | 7634437 B1 | 15-12-2009 |
| | | | US | 2009319442 A1 | 24-12-2009 |
| | | | US | 2011246392 A1 | 06-10-2011 |
| | | | US | 2013317964 A1 | 28-11-2013 |
| | | | US | 2014324661 A1 | 30-10-2014 |
| | | | US | 2016307270 A1 | 20-10-2016 |

EPO FORM P0459

For more details about this annex : see Official Journal of the European Patent Office, No. 12/82

15